# EUROPÄISCHE PATENTSCHRIFT

(11) **EP 1 242 212 B1**
(45) Veröffentlichungstag und Bekanntmachung des Hinweises auf die Patenterteilung: **12.11.2003**
(21) Anmeldenummer: 00922522.8
(22) Anmeldetag: 15.03.2000
(51) Int. Cl.: B23Q 1/00

(54) **WERKZEUGMASCHINE**
MACHINE TOOL
MACHINE-OUTIL

(30) Priorität: 15.03.1999 DE 19911411
(43) Veröffentlichungstag der Anmeldung: 25.09.2002
(73) Patentinhaber: BOEHRINGER WERKZEUGMASCHINEN GmbH, D-73033 Göppingen (DE)
(72) Erfinder: HORSKY, Anton, D-73117 Wangen (DE); RITZ, Otmar, D-73102 Birenbach (DE); SCHREIBER, Leo, D-73529 Schwäbisch-Gmünd (DE)
(74) Vertreter: Alber, Norbert, Dipl.-Ing.
(86) Internationale Anmeldenummer: EP0002309
(87) Internationale Veröffentlichungsnummer: WO00054929

(56) Entgegenhaltungen:
- EP-A- 0 032 642
- WO-A-86/04293
- WO-A-96/22171
- WO-A-96/26051
- CH-A- 417 275
- DE-A- 3 207 076
- DE-A- 3 309 324
- DE-A- 3 626 929
- DE-A- 4 229 423
- DE-A- 4 441 252
- DE-C- 644 182
- GB-A- 639 267
- GB-A- 2 106 438
- US-A- 2 329 357
- US-A- 3 650 166
- US-A- 3 785 227
- US-A- 4 070 934
- US-A- 4 478 117
- US-A- 4 657 455
- PATENT ABSTRACTS OF JAPAN vol. 1996, no. 08, 30. August 1996 (1996-08-30) -& JP 08 099302 A (SYNX KK), 16. April 1996 (1996-04-16)
- BUTTERWORTH NA & FARNWORTH GH: "Concrete in machine tools" MACHINERY AND PRODUCTION ENGINEERING, Bd. 116, Nr. 2999, 6. Mai 1970 (1970-05-06), Seiten 703-709, XP002153949
- NICKLAU RG: "Reaktionsharzbeton für den Werkzeugmaschinenbau" WERKSTATT UND BETRIEB, Bd. 120, Nr. 7, Juli 1987 (1987-07), Seiten 537-542, XP002153950 München

## Beschreibung

Die Erfindung betrifft eine Werkzeugmaschine gemäß dem Oberbegriff des Anspruchs 1 (siehe beispielsweise die JP-A-08099302), beispielsweise eine Drehmaschine.

### II. Technischer Hintergrund

Derartige Werkzeugmaschinen weisen üblicherweise ein Bett auf, auf dem die einzelnen Maschinenmodule, beispielsweise ein oder mehrere Werkzeugträgersysteme, ein oder mehrere Werkstückträgersysteme, Meßeinheiten, Be- und Entladevorrichtungen etc. angeordnet sind.

Aus diesem Grund muß das Bett möglichst eigenstabil ausgebildet sein, da nur hierdurch hohe Bearbeitungsgenauigkeiten der auf der Werkzeugmaschine hergestellten Werkstücke möglich sind.

Um die Maschinenmodule in der Längsrichtung des Bettes, der Z-Richtung, verschieben zu können, sind auf dem Bett Führungsbahnen angeordnet, auf welchen diese Maschinenmodule laufen.

Dabei sind unterschiedliche Bettformen bekannt, beispielsweise bei Drehmaschinen Wannenbetten, Schrägbetten, vertikale und überhängende Betten etc.

Die Betten stehen jedoch in der Regel flächig auf dem Untergrund oder einer Grundplatte auf.

Die unterschiedlichen Bettformen dienen dabei einerseits der Erzielung eines guten Abflusses der bei der Bearbeitung anfallenden Späne, andererseits der Erzielung einer möglichst hohen Stabilität, vor allem unter dynamischen Gesichtspunkten, des Bettes.

Ein Problem ist dabei auch die Energieversorgung der auf der Oberseite bzw. der Vorderseite derartiger Betten geführter Maschinenmodule, die wiederum Motoren aufweisen, beispielsweise für angetriebene Werkzeuge, Bewegung der Werkzeugträgereinheit, z. B. eines Werkzeugrevolvers etc. Hierbei ist vor allem die Energieversorgung der tiefliegenden, unterhalb der Bearbeitungsposition angeordneten Maschinenmodule kritisch, da deren wegen der Längsverschiebbarkeit flexibel auszugestaltende Energiezuführungen im Bereich des Spänefalls liegen.

### III. Darstellung der Erfindung

### a) Technische Aufgabe

Es ist daher eine Aufgabe gemäß der Erfindung, eine Werkzeugmaschine zu schaffen, die trotz einfacher und kostengünstiger Herstellmöglichkeit eine sehr variable Ausgestaltung und Bestückung der Werkzeugmaschine mit Maschinenmodulen gestattet und darüber hinaus trotz guter Späneabfuhr eine einfache und wenig störungsanfällige Energieversorgung insbesondere der unteren Maschinenmodule gestattet.

### b) Lösung der Aufgabe

Diese Aufgabe wird durch die kennzeichnenden Merkmale des Anspruches 1 gelöst. Vorteilhafte Ausführungsformen ergeben sich aus den Unteransprüchen.

Durch die Aufständerung des Bettes zu einem Portalbett, insbesondere an nur zwei Füßen an den Enden des Bettes, können alle Arten von Energiezuführungen und in quasi beliebiger Menge quer unter dem Bett hindurchgeführt und in Längsrichtung zusammen mit den Maschinenmodulen, die sie versorgen, verschoben werden. Dadurch werden Beschränkungen, ob und welche Maschinenmodule an dem unteren Teil des Bettes, also insbesondere unterhalb der Bearbeitungsposition verwendet werden, vermieden.

Einer solchen Aufständerung stand bisher das Vorurteil entgegen, daß eine Werkzeugmaschine umso bessere Bearbeitungsergebnisse erzielt, je stabiler, insbesondere gegenüber Schwingungen, das Bett sowie der das Bett tragende Unterbau ausgebildet sind. Aus diesem Grunde wurden Betten bisher in der Regel vollflächig bzw. auf vielen Kontaktpunkten gegenüber dem Untergrund aufgesetzt.

Dadurch, daß die Aufständerungsfüße nur eine sehr geringe Höhe - eben ausreichend zur Hindurchführung der Energieversorgungsleitungen wie elektrischen Kabeln, Hydraulikleitungen, Pneumatikschläuchen etc. - aufweisen, kann einerseits ein Bettquerschnitt erzielt werden, der eine große Höhe und damit eine große Steifigkeit gegen Durchbiegung besitzt, ohne daß auf der anderen Seite die Bearbeitungsposition, z. B. die Drehmitte einer Drehmaschine, zu hoch zu liegen kommt für den vor der Maschine stehenden Bediener, auch wenn die Bearbeitungsposition im oberen Höhenbereich des Bettes, insbesondere in der oberen Hälfte, liegt, weil im unteren Bereich ein unterer Werkzeugsupport vorgesehen ist.

Dadurch, daß das Portalbett einen etwa rechteckigen Querschnitt, jedenfalls im rechten Winkel zueinander liegende, die einzelnen Führungsbahnen tragende, Außenseiten, insbesondere Oberseite und Frontseite, besitzt, ist die Bearbeitung des Bettes leicht und kostengünstig durchzuführen. Durch ausschließlich in Z-Richtung darauf verlaufende Führungsbahnen, und Verwendung identischer Führungsbahnen kann einerseits weitere Kostenreduzierung erzielt werden und andererseits können die einzelnen Maschinenmodule auf unterschiedlichen Führungsbahnen aufgesetzt werden. Aus diesem Grund sind alle Führungsbahnen in beiden Querrichtungen (X- und Y-Richtung) zur Verschieberichtung (Z-Richtung) formschlüssig, insbesondere hintergreifend, ausgebildet.

Zusätzlich weist das Portalbett in Längsrichtung durchgehende und beidseits offene Durchgangsöffnungen auf, die ebenfalls dem Hindurchführen von Leitungen, insbesondere Energieversorgungsleitungen, von einem Ende zum anderen der Maschine dienen können. Bei Herstellung aus Kunststoff bzw. einem Beton-Kunststoffgemisch bestehen die Durchgangsöffnungen in der Regel aus zwei oder drei übereinander angeordneten, kreisförmigen Durchgangsöffnungen, bei Herstellung des Portalbettes aus Stahlguß verbleiben die Durchgangsöffnungen zwischen der umgebenden, umlaufenden Außenschale und den einstückig damit ausgebildeten Verrippungen, in der Regel also zwei oder drei große Hohlkammern. Der Querschnitt des Portalbettes ist 1,5 bis 3 mal so hoch, insbesondere 1,8 bis 2,2 mal so hoch, wie die Tiefe des Portalbettes, und Führungen sind vorzugsweise nur auf der Oberseite und Frontseite angeordnet, und zwar auf der Oberseite ein Paar von Führungen und an der Frontseite zwei Paar von Führungen.

In einer bevorzugten Ausführungsform weisen die Führungspaare an der Frontseite unterschiedlichen Führungsbahnenabstand auf, die Paare liegen jedoch relativ nah übereinander. In einer anderen bevorzugten Ausführungsform ist der Abstand der Führungsbahnen innerhalb der Paare gleich und auch der Abstand der Paare zueinander, so daß insgesamt nur gleichbeabstandete Führungen, vorzugsweise vier Führungsbahnen, an der Frontseite angeordnet sind.

An der Unterseite sind vorzugsweise keine Führungsbahnen angeordnet, um die notwendige Höhe der Bettfüße nicht zu vergrößern.

Bestenfalls könnte an der Vorderkante der Unterseite noch eine Führungsbahn angeordnet sein, wodurch die untere vordere Kante des Bettes jedoch nur geringfügig von einem Maschinenmodul umgriffen würde. Vollständig entlang der Unterseite, also mittels an der Vorder- und Hinterkante der Unterseite angeordneter Führungsbahnen, geführte Maschinenmodule würden zu einer Vergrößerung der Aufständerungshöhe und den damit einhergehenden Nachteilen erkauft werden. Zwischen den einzelnen Führungsbahnen sind - ebenfalls in Längsrichtung verlaufend und insbesondere durchgehend - rinnenförmige Vertiefungen in der Oberfläche des Portalbettes vorhanden, die der Aufnahme der die Maschinenmodule in Längsrichtung antreibenden Kugelrollspindeln oder anderer vermittelnder Antriebselemente dienen.

Um die Führungsbahnen vor Verschmutzung zu schützen, sind in Längsrichtung vorzugsweise teleskopierbare Abdeckungen angeordnet, die vorzugsweise immer ein Paar von Führungsbahnen gemeinsam abdecken, also beispielsweise das auf der Oberseite angeordnete Paar von Führungsbahnen.

Um ein Einquetschen von Spänen zwischen zwei aneinander angrenzenden Teleskop-Abdeckungen zu vermeiden, sind zwischen den in der Höhe übereinander angeordneten einzelnen Abdeckungen, die jeweils für sich in Längsrichtung teleskopierbar sind, Zwischenabdeckungen, insbesondere fest montierte und nicht teleskopierbare, Zwischenabdeckungen angeordnet, wobei die darüberliegende teleskopierbare Führungsabdeckung und die darunter angeordnete Führungsabdeckung von zwei verschiedenen Seiten an der Zwischenabdeckung angreifen. Die Zwischenabdeckung verläuft dabei schräg nach unten abfallend oder gar vertikal, um ein Eindringen von Spänen zwischen die einzelnen Abdeckungen zu vermeiden.

Die Bettfüße sind vorzugsweise nicht Bestandteil des Bettes, sondern separate Einzelteile. Das Portalbett steht vorzugsweise auf einer Grundplatte, die als Schweißkonstruktion ausgeführt ist, und auch die Bettfüße sind vorzugsweise Schweißkonstruktionen, die auf der Grundplatte aufgeschraubt oder einstückig zusammen mit dieser ausgebildet sind. Dabei muß eine Relativverschiebung des Bettes zu der tragenden Baugruppe, also beispielsweise der Grundplatte, aufgrund von Wärmedehnungen des Bettes im Bearbeitungseinsatz möglich sein, beispielsweise durch entsprechendes Spiel der Verschraubungen.

Auf einer solchen Grundplatte stehen hinter dem Bett der Werkzeugmaschine vorzugsweise auch die benötigten Schaltschränke und Energieversorgungseinrichtungen wie Hydraulik- und Pneumatikpumpen und ähnliches, und auch ein Be- und Entladesystem für die Maschine ist entweder auf dieser Grundplatte oder direkt stimseitig am Maschinenbett befestigt. Die Schaltschränke und Energieversorgungseinrichtungen können dabei möglichst nahe an der Rückseite des Bettes plaziert sein oder in einem so großen Abstand hierzu, daß dazwischen ein Servicegang entsteht, von dem aus Servicepersonal an der Rückseite der Maschine Wartungs- und Reparaturarbeiten durchführen bzw. die Maschine im Betrieb beobachten kann.

Dabei können die Zusatzeinrichtungen, also Schaltschränke und Energieversorgungseinrichtungen vorzugsweise mit Hilfe einer Hilfskonstruktion, eines sogenannten Schaltschrankrahmens, am Bett oder der Grundplatte montiert sein, und zwar wahlweise in der möglichst weit angenäherten oder zwecks Erzielung des Serviceganges beabstandeten Position, je nach der zur Verfügung stehenden Aufstellfläche beim Anwender.

In allen Fällen wird dabei die Maschine im fertig montierten Zustand, also als sogenannte Hakenmaschine, vorzugsweise jedoch mit der angenäherten Position der Zusatzaggregate am Bett, transportiert, indem das Bett mit allen daran befindlichen Nebenaggregaten und Maschinenmodulen z. B. am Kranhaken angehoben wird, und erst nach der Aufstellung die Zusatzaggregate in die vom Bett beabstandete Position gebracht werden.

Darüber hinaus muß auch in der angenäherten Position zwischen den Schaltschränken, die ja in der Regel über die gesamte Längserstreckung der Maschine angeordnet sind, und der Rückseite des Bettes noch ausreichend Platz für dortige Energieversorgungsleitungen, beispielsweise Kabelschleppeinrichtungen, bestehen bleiben. Insbesondere auf der Höhe der Oberkante und Unterkante des Portalbettes sind Kabelschleppvorrichtungen angeordnet, die die unteren bzw. oberen Werkzeugmodule mit Energie versorgen.

Durch diese Kabelschleppvorrichtungen können insbesondere eine Werkzeugeinheit, die auf der Oberseite des Portalbettes längsgeführt ist sowie eine Werkzeugeinheit, die auf dem unteren Führungspaar der Frontseite geführt ist, problemlos mit Energie versorgt werden.

Die Späneabfuhr geschieht mittels eines Späneförderers, der unmittelbar vor der Frontseite des Maschinenbettes entsprechend tief angeordnet ist. Zu diesem Zweck weist bei Verwendung einer Grundplatte diese eine abgeschrägte obere Vorderkante auf, und das Portalbett ist so weit vorne auf der Grundplatte montiert, daß seine Vorderkante sich bereits über dieser Abschrägung der Grundplatte befindet.

Eine Werkstückeinheit, insbesondere ein Spindelstock bzw. Reitstock, die auf dem oberen Führungspaar der Frontseite längsgeführt ist, wird daher vorzugsweise so ausgebildet, daß sie ohne Energiezuführung auskommt, beispielsweise indem die Längsbewegung mittels eines mechanischen Elementes, etwa einer Kugelrollspindel, bewirkt wird, und das Aufnehmen des Werkstückes, beispielsweise bei einem Reitstock, mittels Federvorspannung der Pinole gegenüber dem Reitstockgehäuse passiv erfolgt. Dadurch wird bei einem in Längsrichtung bewegbaren Maschinenmodul in der Mitte der Höhe der Werkzeugmaschine eine mitbewegbare Energiezuführung vermieden. Ein von der Stabilität aufgrund seiner Rechteckform sehr gleichmäßiges Portalbett mit identischen, parallellaufenden Z-Führungen kann für unterschiedliche Maschinenaufbauten verwendet werden:

Eine bevorzugte Ausführungsform ist die Ausführung als Drehmaschine, bei der insbesondere der Spindelstock und eventuell der zusätzliche Reitstock an der Frontseite des Portalbettes im oberen Bereich geführt ist, während im unteren Bereich sowie auf der Oberseite Maschinenmodule, in der Regel Werkzeugschlittensysteme, geführt sind. Dabei können - von der Frontseite der Maschine betrachtet - sogar jeweils zwei solcher Einheiten auf denselben Führungsbahnen, also rechts und links vom Werkstück, vorhanden sein.

Während bei der herkömmlichen Bauform dabei die Spindelachse in Z-Richtung gerichtet ist, kann auch eine Queranordnung, also beispielsweise in Vertikalrichtung (X-Richtung) gewählt werden, insbesondere, wenn der Spindelstock dabei entlang der Führungsbahnen der Oberseite des Portalbettes geführt ist.

Auch eine Ausformung als Fräsmaschine mit einer Werkzeugaufnahme im oberen Bereich der Frontseite des Portalbettes ist möglich, mit Fräseinheiten, die entlang der Führungsbahnen der Oberseite geführt sind. Wenn zusätzlich die das Werkstück tragende Einheit im unteren Bereich des Portalbettes längsgeführt ist, stehen die Längsführungen des oberen Bereiches der Vorderseite zusätzlich für Werkzeugmodule, Meßmodule oder ähnliches zur Verfügung. Damit ist auch eine Ausformung der Maschine als gemischte Fräs/Drehmaschine möglich, also sowohl mit Werkzeugmodulen, die reine Fräsmodule sind, also auch mit Werkzeugmodulen, die denen einer Drehmaschine entsprechen, also einen Werkzeugrevolver mit Drehmeißeln und gegebenenfalls zusätzlichen angetriebenen Werkzeugen, tragen.

### c) Ausführungsbeispiele

Eine Ausführungsform gemäß der Erfindung ist im folgenden anhand der Figuren beispielhaft näher beschrieben. Es zeigen:
- Fig. 1a:: zeigt eine Drehmaschine gemäß der Erfindung in der Seitenansicht, mit nahe an dem Bett der Maschine angeordneten Schaltschränken,
- Fig. 1b:: zeigt eine ähnliche Drehmaschine in gleicher Ansicht, jedoch mit beabstandeten Schaltschränken,
- Fig. 2:: zeigt die Drehmaschine der Figuren 1 in der Frontansicht ohne Schaltschränke und mit teilweise entfernten Führungsabdeckungen,
- Fig. 3:: zeigt eine anders aufgebaute Werkzeugmaschine in der Seitenansicht, und
- Fig. 4:: eine gegenüber der Darstellung der Fig. 3 ergänzte Werkzeugmaschine in der Frontansicht.

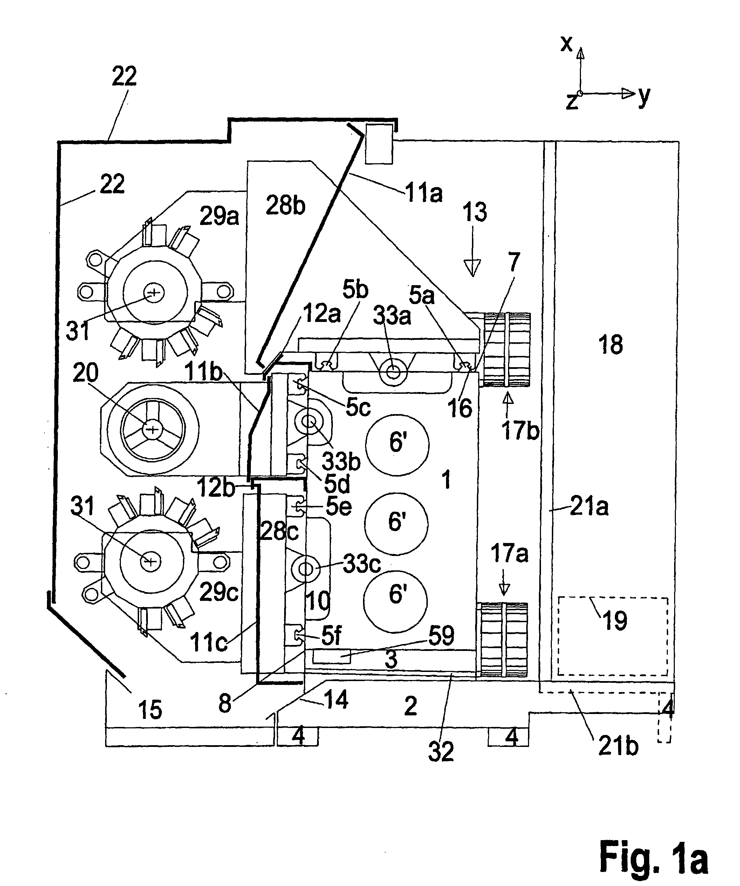

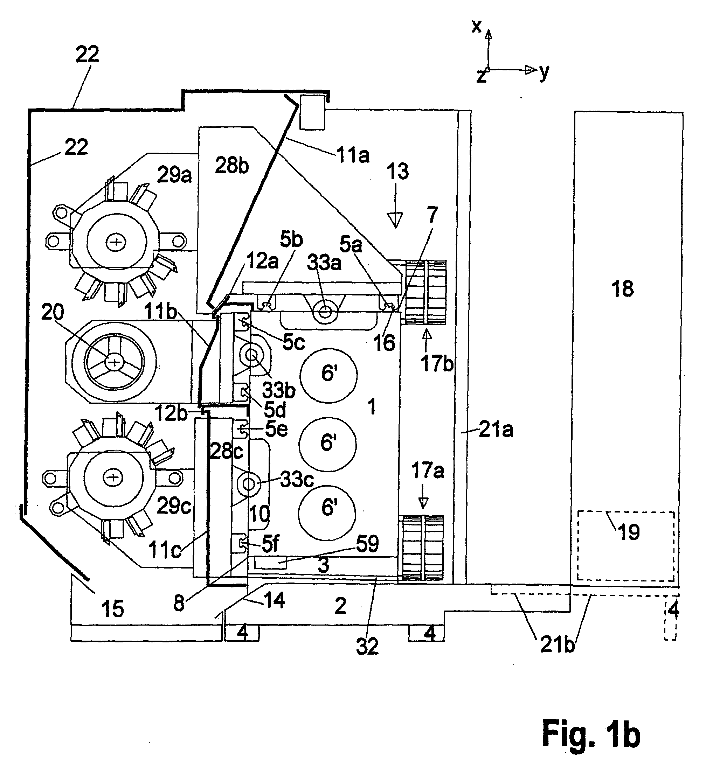

In den Figuren 1a und 1b ist die eigentliche Werkzeugmaschine, also mit Ausnahme der Position der hinter der Hinterseite 13 des Bettes angeordneten Schaltschränke 18 und Energieversorgungseinrichtungen 19, die gleiche.

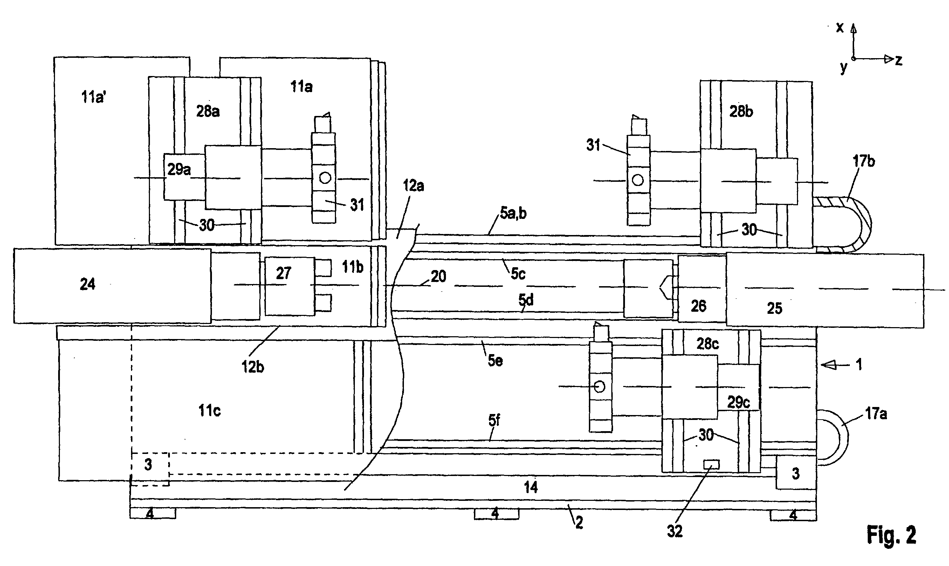

Wie vor allem die Frontansicht der Fig. 2 zeigt, ist das Portalbett 1 gegenüber dem Untergrund, nämlich hier der Grundplatte 2, mittels zweier Bettfüße 3 aufgeständert, die in Z-Richtung betrachtet unter den beiden längsseitigen Enden des Portalbettes 1 stehen, und in der Tiefenrichtung (Y-Richtung) des Bettes sich vorzugsweise über die gesamte Tiefe erstrecken.

Das Portalbett 1 ist ein in sich stabiler Balken mit Hohlräumen, insbesondere Durchgangsöffnungen 6' in Längsrichtung, und besteht bei der Lösung gemäß den Figuren 1 und 2 aus Beton bzw. einer Kunststoff-Beton-Mischung.

An der Oberseite 7 und der Frontseite 8 des hochkant stehenden, rechteckigen Querschnittes des Portalbettes 1 sind Führungsbahnen 5a bis 5f angeordnet, und zwar ein erstes Paar (5a, 5b) an der Oberseite, nahe an der Vorder- und an der Hinterkante der Oberseite 7, und vier Führungsbahnen 5c bis 5f an der Frontseite 8, wobei die oberste nahe der Oberkante und die unterste nahe der Unterkante angeordnet sind. Der Abstand zwischen den beiden mittleren Führungsbahnen 5d, 5e ist geringer als zwischen dem oberen und unteren Paar von Führungsbahnen, da zwischen den mittleren Führungen nur Raum für die Anordnung einer fest montierten Zwischenabdeckung, wie später erläutert, vorhanden sein muß.

Es ist jedoch auch die Beabstandung der Führungsbahnen an der Frontseite 8 mit jeweils gleichen Abständen vorstellbar.

Die Durchgangsöffnungen 6' sind von kreisförmigem Querschnitt, und es sind drei kreisförmige Durchgangsöffnungen so übereinander in der vertikalen Mittelebene des Bettes angeordnet, daß die verbleibenden Materialdicken zur Oberseite, zur Unterseite sowie zwischen den Durchgangsöffnungen etwa gleich groß ist, und ebenso zur Frontseite 8 und Hinterseite 13. Die einzelnen Führungsbahnen 5 sind jeweils identisch ausgebildet, und ebenso die auf den Führungsbahnen laufenden Führungsschuhe 16. Während sich die Führungsbahnen über im wesentlichen die gesamte Länge (Z-Richtung) des Portalbettes 1, nämlich über den gesamten vorgesehenen Bewegungsbereich der darauf laufenden Maschinenmodule, erstrecken, weist jedes Maschinenmodul in der Regel in Längsrichtung nur am Anfang und am Ende einen Führungsschuh 16 auf, welcher auf der entsprechenden Führungsbahn 5 läuft. Dabei sind die Führungsbahnen 5 sowie die darauf laufenden Führungsschuhe 16, die in der Regel als Rollführungsschuhe ausgebildet sind, in die beiden anderen Raumrichtungen (X- und Y-Richtung) jeweils formschlüssig hintergreifend ausgebildet, was den Vorteil bietet, daß alle Längsführungen identisch ausgebildet sind, unabhängig davon, in welcher Richtung die Schwerkraft bezüglich der Führungsbahn 5 einwirkt.

Zwischen den paarweise genutzten Führungsbahnen sind rinnenförmige in Längsrichtung verlaufende Vertiefungen 10 in den entsprechenden Außenseiten des Portalbettes 1 angeordnet, um dort Raum für die Gewindespindeln 33a, b, c zu bieten, mit deren Hilfe die auf den Führungen laufenden Maschinenmodule in Z-Richtung angetrieben werden.

Unmittelbar hinter der Hinterseite 13 des Portalbettes 1 sind im oberen und im unteren Bereich an sich bekannte Kabelschleppvorrichtungen 17a, 17b angeordnet, um die Energieleitungen den in Längsrichtung beweglichen Maschinenmodulen nachzuführen. Von den aus einzelnen Gliedern bestehenden, U-förmig gekrümmten Kabelschleppvorrichtungen ist dabei - z. B. bei der oberen Vorrichtung 17b - das eine freie Ende dem Portalbett 1 nahe dessen Oberkante zugeordnet, das andere Ende dagegen dem oberen Werkzeugsupport. Jeder einzelnen Werkzeugeinheit ist eine separate Kabelschleppvorrichtung zugeordnet.

Bei der unteren Kabelschleppvorrichtung 17a erfolgt die Zuordnung des unteren Endes zur unteren Werkzeugeinheit auf einer Höhe, die unterhalb der Unterseite des Portalbettes 1 liegt, so daß die von diesem unteren Ende der Kabelschleppvorrichtung 17a weiterzuführenden Energieleitungen dann zwischen der Unterseite des Portalbettes 1 und dem Untergrund, also in diesem Fall der Grundplatte 2, also im Höhenbereich der Bettfüße, zur Frontseite 8 und der dort laufenden, unteren längsbeweglichen Maschineneinheit geführt werden können.

Als Maschinenmodule weist die Maschine der Figuren 1 und 2 folgende Bestückung auf: Auf den oberen beiden Führungsbahnen 5c und 5d der Frontseite 8 läuft - wie die Frontansicht der Fig. 2 zeigt - ein in Z-Richtung beweglicher Reitstock 25, der eine Pinole 26 trägt, die auf den gegenüberliegenden Spindelstock 24 gerichtet ist. Die Pinole 26 ist gegenüber dem Reitstockgehäuse 25 federbeaufschlagt, so daß nur durch aktive Anpressung eines Werkstückes die Reitstockspitze in den Reitstock 25 hineingedrückt werden kann.

Der Spindelstock 24, in dem mit Hilfe eines Spannfutters 27 das (nicht dargestellte) Werkstück drehend auf der Drehmitte 20 gehalten und angetrieben werden kann, kann an dem Portalbett 1 entweder fest angeordnet oder auch entlang der Führungsbahnen 5c, 5d verschiebbar geführt sein.

Auf den beiden unteren Führungsbahnen 5e, 5f der Frontseite 8 des Portalbettes 1 ist ein unterer Werkzeugsupport, nämlich ein Längsschlitten 28c, geführt, auf dessen Querführungen 30 ein Querschlitten 29c in X-Richtung verfahrbar ist, welcher einen Werkzeugrevolver 31 trägt, dessen Werkzeuge am Werkstück arbeiten können.

Auf den Führungsbahnen 5a, 5b der Oberseite 7 des Portalbettes 1 sind zwei Werkzeugeinheiten längsverschiebbar angeordnet, die jeweils einen Längsschlitten (28a, 28b) aufweisen, auf dessen Querführungen 30 jeweils ein Querschlitten 29a, 29b verfahrbar ist, welcher wiederum jeweils einen Werkzeugrevolver 31 trägt. Die Werkzeugrevolver 31 sind jeweils gegeneinander gerichtet, um von beiden Seiten her und damit möglichst gleichzeitig am selben Werkstück arbeiten zu können.

Im vorliegenden Fall der Figur 1 und 2 sind die Rotationsachsen der Werkzeugrevolver 31 bei allen Werkzeugeinheiten parallel zur Z-Richtung.

Wie Fig. 1 zeigt, sind an der Werkzeugmaschine unterschiedliche Abdeckungen vorhanden: Zum Einen eine den gesamten Arbeitsraum an der Frontseite, Oberseite und Unterseite abdeckende Arbeitsraumabdeckung 22, die (nicht dargestellt) in Längsrichtung geöffnet werden kann, wahlweise nur an der Frontseite, nur an der Oberseite oder an beiden. Diese Arbeitsraumabdeckung 22 ist in der Darstellung der Frontansicht der Fig. 2 vollständig weggelassen.

Der Arbeitsraum wird an der Rückseite begrenzt durch dort geführte Führungsabdeckungen 11a, b, c, die vor den Führungsbahnen 5 und damit dem Portalbett 1 angeordnet sind, um die im Arbeitsraum auftretenden Verschmutzungen von den Führungsbahnen 5 abzuhalten. Wie in der Frontansicht der Fig. 2 nur in der linken Maschinenhälfte dargestellt, sind diese Führungsabdeckungen 11 a, b, c jeweils teleskopierbar in Längsrichtung ausgebildet und an dem jeweiligen Längsschlitten befestigt, um je nach dessen Position immer die gesamte Länge der Führungsbahnen abzudecken. In vertikaler Richtung überlappen diese Führungsabdeckungen 11a, b, c nicht direkt, sondern nur mittelbar durch dazwischen angeordnete, nicht teleskopierbare festmontierte Zwischenabdeckungen 12a, b, wie am besten in Fig. 1a, 1b ersichtlich.

Diese Zwischenabdeckungen 12a, b sind schräg nach unten abfallend oder vollständig vertikal ausgebildet, wie auch die teleskopierbaren Führungsabdeckungen 11a, b, c, um darauf auftreffende Verschmutzungen nach unten abzuleiten. Die jeweils bezüglich einer Zwischenabdeckung 12 höherliegende Führungsabdeckung, z. B. 11a, endet mit ihrem unteren Ende vor der jeweiligen Zwischenabdeckungen, z. B. 12a, während die darunterliegende teleskopierbare Führungsabdeckung 11b mit ihrem oberen Ende hinter dieser Zwischenabdeckung 12a endet. Dadurch ist das Eindringen von Verschmutzungen, insbesondere von Spänen, zwischen zwei direkt gegeneinanderlaufende teleskopierbare Führungsabdeckungen vermieden, was manchmal zum Blockieren solcher teleskopierbarer Abdeckungen führt.

Die obere Zwischenabdeckung 12a ist dabei schräg nach oben abfallend angeordnet und an der oberen Längskante des Portalbettes 1 montiert.

Die zwischen den beiden Paaren von Führungen 5c, 5d und 5e, 5f montierte untere Zwischenabdeckung 12b ist als U-förmiges, nach unten offenes Winkelprofil mit dem einen frei endenden Schenkel an der Frontseite 8 des Portalbettes 1 verschraubt, während der vordere frei nach unten weisende Schenkel als eigentliche Zwischenabdeckung dient.

Das Portalbett 1 ist mittels der Bettfüße 3 auf einer Grundplatte 2 angeordnet, die ihrerseits mittels Grundplattenfüßen 4 auf dem Untergrund steht und exakt waagerecht eingestellt werden kann. Die vordere Oberkante der Grundplatte 2 weist dabei eine nach vorne abfallende Abschrägung 14 auf, und das Portalbett 1 steht so weit vorne auf der Grundplatte 2, daß ihre Frontseite 8 bereits über dieser Abschrägung 14 angeordnet ist. Dadurch wird der Spänefall, auch entlang der Führungsabdeckungen 11 - nach unten direkt in den Späneförderer 15 erleichtert, welcher unmittelbar vor der Grundplatte angeordnet ist, wobei die Abschrägung 14 die Späne ebenfalls in den in Längsrichtung verlaufenden Späneförderer 15 (der in Fig. 2 aus Übersichtlichkeitsgründen weggelassen ist) ableitet.

Die Seitenansichten der Figuren 1a und 1b unterscheiden sich durch die Positionierung der Schaltschränke 18 und Energieversorgungseinrichtungen 19 wie etwa Hydraulikpumpen bezüglich des Portalbettes 1. Während in Fig. 1a diese Zusatzeinrichtungen möglichst nahe am Portalbett 1 positioniert sind, nämlich an dem unmittelbar hinter den Kabelschleppvorrichtungen 17a, 17b in die Höhe ragenden Vertikalrahmen 21a des Schaltschrankrahmens 21, und dabei auf dem Horizontalrahmen 21 b aufsitzen, sind diese Zusatzeinrichtungen in Fig. 1b demgegenüber horizontal in Y-Richtung beabstandet. Die Zusatzeinrichtungen werden dabei etwa zusammen mit teleskopierbaren Teilen des Horizontalrahmens 21b nach hinten verschoben, wobei dieser Horizontalrahmen 21b Teil der Grundplatte 2 sein kann. In dieser beabstandeten Position der Zusatzeinrichtungen gemäß Fig. 1b können die Zusatzeinrichtungen jedoch auch bei einem separaten, hinter der Hinterkante der Grundplatte 2 zu positionierenden Sockel oder Einzelfüßen angeordnet sein.

Insbesondere wird die Maschine in dem Kompaktzustand der Fig. 1a ausgeliefert, und zwar mit fertig verklemmtem Schaltschrank 18 und angeschlossenen Energieversorgungseinrichtungen 19. Für das Erzielen der beabstandeten Position der Fig. 1b muß die Länge der Zusatzeinrichtungen mit der eigentlichen Werkzeugmaschine verbindenden Leitungen groß genug sein, um die Beabstandung in Y-Richtung durchführen zu können. Im Kompaktzustand der Fig. 1a sind überschüssigen Längen der Energiezuführleitungen dabei in einem entsprechenden Hohlraum innerhalb des Schaltschrankrahmens 21 und/oder im Zwischenraum zwischen dem Portalbett 1 und dem Schaltschrankrahmen 21 aufgenommen.

Der beabstandete Zustand der Fig. 1b dient der Erzielung eines Serviceganges 34 zwischen den Energieversorgungseinrichtungen und der Rückseite der eigentlichen Werkzeugmaschine, indem dazwischen ein Laufsteg 23 aus Gitterrosten etc. montiert wird, und zwar vorzugsweise gegenüber dem Niveau der Grundplatte angehoben, um den Bediener in der richtigen Blickhöhe Einblick in die Werkzeugmaschine, vorzugsweise oberhalb des Portalbettes 1, nehmen lassen zu können.

Zu diesem Zweck sind in der Vertikalebene des Vertikalrahmens 21a des Schaltschrankrahmens Trennplatten angeordnet, um während des Betriebes der Maschine ein Hineingreifen einer Person, die auf dem Laufsteg 23 steht, in die Maschine zu verhindern. Die Trennplatten können vorzugsweise durchsichtig ausgebildet sein und sind lösbar oder aufschwenkbar, beispielsweise durch Türbeschläge.

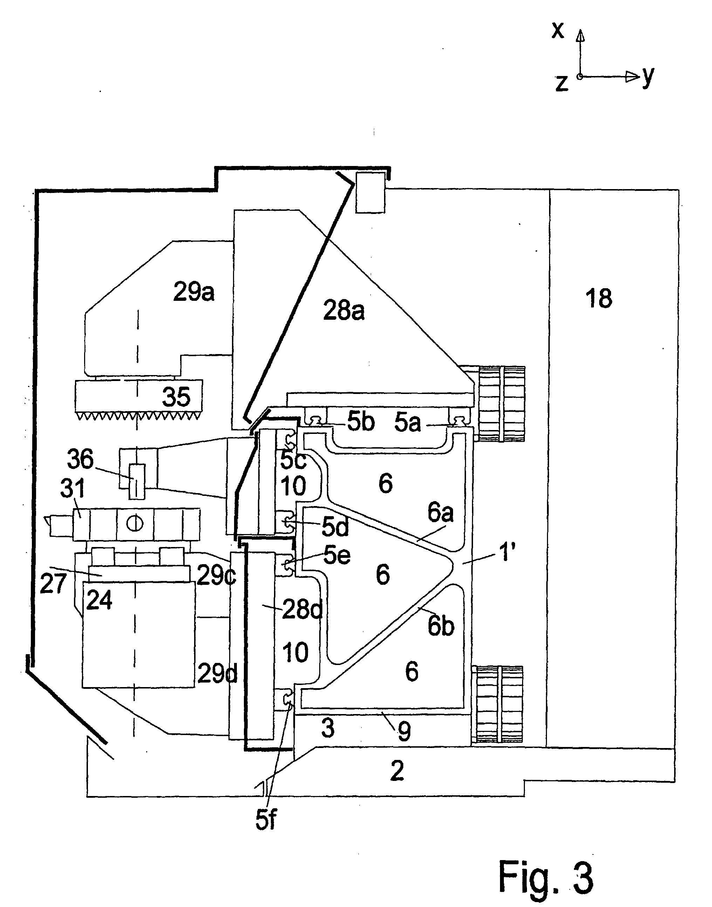

Die Werkzeugmaschine gemäß Fig. 3 unterscheidet sich von derjenigen gemäß Fig. 1a einerseits durch die Herstellungsart des Portalbettes 1, und andererseits durch die auf dem Portalbett 1 aufgebauten Maschinenmodule:

Im Gegensatz zu dem aus Beton oder Beton-Kunststoff-Mischung bestehenden Portalbett 1 in Fig. 1a, welches entsprechend große Wandstärken aufweist, besteht das Portalbett 1' in Fig. 3 aus Metallguß und besitzt dementsprechend sehr viel geringere Wandstärken. Zur Versteifung und Schwingungsdämpfung weist das Portalbett 1 neben den außen umlaufenden Wänden zwei Querrippen 6a, 6b auf. Diese laufen von einem Punkt mittlerer Höhe der Rückseite des Portalbettes 1' schräg nach oben und nach unten, und treffen auf die Wandung der Frontseite im Bereich der Vertiefungen 10 zwischen dem obersten und untersten Paar von Führungsbahnen auf der Frontseite.

Die Querrippen 6a, 6b sind einstückig mit den Außenumfangswänden ausgebildet, und verlaufen wie diese in Längsrichtung, der Z-Richtung, des Portalbettes 1, so daß die drei zwischen den Verrippungen und Außenwänden entstehenden, unregelmäßig geformten Durchgangsöffnungen 6 stirnseitig offen sind.

Auf diesem Portalbett 1' ist eine kombinierte Dreh-Fräsmaschine aufgebaut.

Der Spindelstock 24, der das Spannfutter 27 für das (nicht dargestellte) Werkstück trägt, ist jedoch vertikal ausgerichtet und befindet sich auf dem vertikal verfahrbaren Querschlitten 29d eines Längsschlittens 28d, welcher auf dem unteren Paar von Führungsbahnen 5e, 5f der Frontseite 8 des Portalbettes 1' in Längsrichtung des Bettes, der Z-Richtung, verfahrbar ist.

Ein so gehaltenes Werkstück kann gemäß Fig. 3 entweder durch einen mit Drehwerkzeugen oder auch angetriebenen Werkzeugen bestückten Werkzeugrevolver 31 bearbeitet werden, der mit einer Drehachse parallel zum Spindelstock 24, also insbesondere vertikaler Drehachse, auf einem Querschlitten 29c angeordnet ist, der wiederum auf einem Längsschlitten 28c vertikal verfahrbar ist, welcher auf den gleichen Führungsbahnen 5e, 5f wie der Spindelstock 24 läuft.

Auf den Führungsbahnen 5a, 5b der Oberseite 7 des Portalbettes 1' ist über Längsschlitten 28a und daran in vertikaler Richtung verfahrbarem Querschlitten 29a ein Fräskopf 35 angeordnet, dessen Rotationsachse ebenfalls vertikal steht, und der soweit nach unten verfahren werden kann, daß er an einem im Spindelstock 24 gehalterten Werkzeug arbeiten kann.

Der Spindelstock 24 und das zugehörige Spannfutter 27 sind dabei vorzugsweise in der Lage, eine definierte Drehlage einzunehmen (realisierte C-Achse). Zusätzlich ist auf dem oberen Paar von Führungsbahnen 5c, 5d, die im oberen Bereich an der Frontseite 8 des Portalbettes 1' liegen, ein Meßkopf 36 angeordnet, der auf einem Querschlitten 29e montiert ist, welcher wiederum auf einem Längsschlitten 28e vertikal verfahrbar ist.

Anstelle der in Fig. 3 dargestellten Maschinenkonfiguration sind auch andere Zusammenstellungen möglich. Würde beispielsweise das Schlittensystem für den Meßkopf 36 nicht vorhanden sein, so könnte für das obere, den Fräskopf 35 tragende, Schlittensystem als Abstützung die Längsführung 5a der Oberseite zusammen mit der obersten Längsführung 5c der Unterseite benutzt werden, und analog für das Schlittensystem des Spindelstockes 24 und/oder des Werkzeugrevolvers 31 der Fig. 3 die Führungsbahnen 5d und 5f, wodurch für beide Schlittensysteme der größtmögliche Relativabstand der für sie verwendeten Führungsbahnen gewählt wäre. Entsprechend sind dann auch die Führungsabdeckungen und deren Zwischenabdeckungen anders anzuordnen.

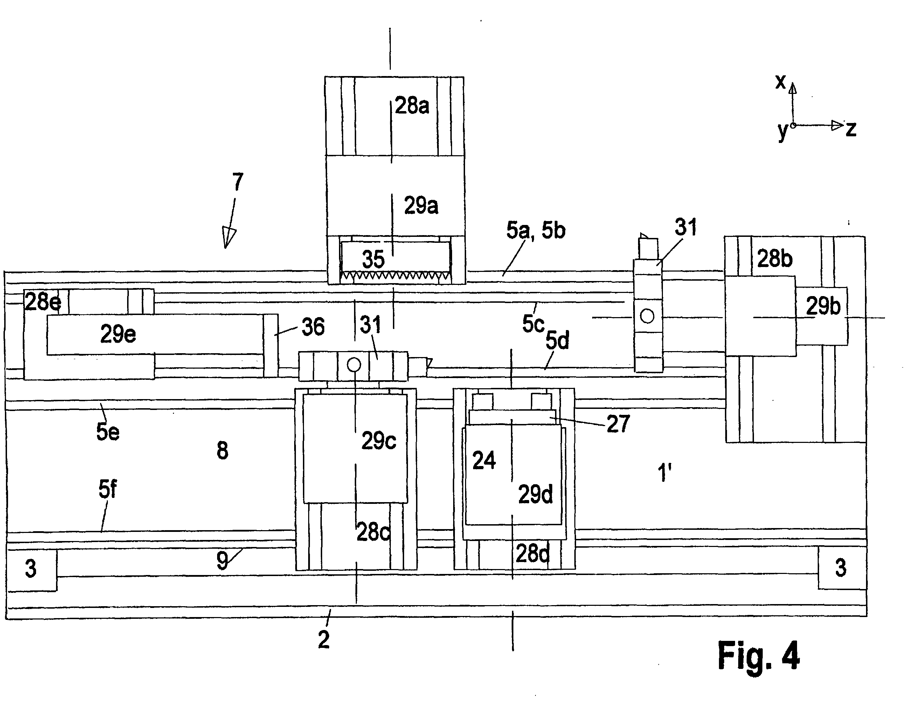

Fig. 4 zeigt die Werkzeugmaschine gemäß Fig. 3 in der Frontansicht, jedoch mit erweitertem Maschinenaufbau. Zusätzlich sind bei der Ausführungsform gemäß Fig. 4 ein weiteres Schlittensystem, bestehend aus Längsschlitten 28b und Querschlitten 29b, vorhanden, die auf dem oberen Paar von Führungsbahnen 5c, 5d der Frontseite 8 laufen, und ebenfalls einen Werkzeugrevolver 31' mit Drehwerkzeugen und/oder angetriebenen Werkzeugen tragen, wobei allerdings die Rotationsachse dieses Werkzeugrevolvers 31' horizontal verläuft.

Ebenso könnte dieses zusätzliche Schlittensystem auch auf den oberen Führungsbahnen 5a, 5b der Oberseite 7 angeordnet sein, oder dort könnte nochmals ein zusätzliches Werkzeugsystem laufen.

### BEZUGSZEICHENLISTE

- 1: Portalbett
- 2: Grundplatte
- 3: Bettfüße
- 4: Grundplattenfüße
- 5: Führungsrahmen
- 6, 6': Durchgangsöffnung
- 7: Oberseite
- 8: Frontseite
- 9: Unterseite
- 10: Vertiefungen
- 11a, 11b, 11c: Führungsabdeckung
- 12a, 12b: Zwischenabdeckungen
- 13: Hinterseite
- 14: Abschrägung
- 15: Späneförderer
- 16: Führungsschuh
- 17: Kabelschleppvorrichtungen
- 18: Schaltschränke
- 19: Energieversorgungseinrichtungen
- 20: Drehmitte
- 21: Schaltschrankrahmen
- 22: Arbeitsraumabdeckung
- 23: Laufsteg
- 24: Spindelstock
- 25: Reitstock
- 26: Pinole
- 27: Spannfutter
- 28a, 28b: obere Längsschiene
- 28c: untere Längsschiene
- 29a, 29b: obere Querschiene
- 29c: untere Querschiene
- 30: Querführungen
- 31: Werkzeugrevolver
- 32: Energie-Leitung
- 33: Gewindespindel
- 34: Servicegang

## Patentansprüche

1. Werkzeugmaschine mit einem Bett (1), auf welchem Führungsbahnen (5) zum Tragen von Maschinenmodulen angeordnet sind, wobei
(A) das Bett ein auf wenigstens zwei in seiner Längsrichtung (Z) beabstandeten Bettfüßen (3) aufgeständertes Portalbett (1) ist, und
(B) das Portalbett (1) in Längsrichtung (Z) verlaufende Führungsbahnen (5) aufweist,
**dadurch gekennzeichnet, daß**
(C) das Portalbett in Längsrichtung (Z) durchgehend wenigstens zwei Durchgangsöffnungen (6, 6') aufweist, und daß
(D) es sich bei den Führungsbahnen (5) um in beide Querrichtungen zur Längsrichtung (Z) mit formschlüssigem Hintergriff ausgestattete Führungsquerschnitte handelt.

2. Werkzeugmaschine nach Anspruch 1,
**dadurch gekennzeichnet, daß**
- die wenigstens zwei in Längsrichtung (Z) beabstandeten Bettfüße (3) an den Enden des Portalbettes (1) in Längsrichtung (Z) angeordnet sind, und insbesondere
- der Raum unter dem Portalbett (1) zwischen den Bettfüßen (3) quer zur Längsrichtung (Z) frei zugänglich ist.

3. Werkzeugmaschine nach einem der vorhergehenden Ansprüche,
**dadurch gekennzeichnet, daß**
das Portalbett (1) ausschließlich in Längsrichtung (Z) verlaufende Führungsbahnen (5) aufweist.

4. Werkzeugmaschine nach einem der vorhergehenden Ansprüche,
**dadurch gekennzeichnet, daß**
- das Portalbett (1) quer zur Längsrichtung (Z) liegend einen rechteckigen, insbesondere Hochkant stehenden, Querschnitt besitzt, und insbesondere
- der Querschnitt des Portalbettes (1) eine Höhe aufweist, die der 1,5-fachen bis 3-fachen, insbesondere der 1,8-fachen bis 2,2-fachen Tiefe des Bettes entspricht, oder
- das Portalbett (1) einen quadratischen Querschnitt besitzt.

5. Werkzeugmaschine nach einem der vorhergehenden Ansprüche,
**dadurch gekennzeichnet, daß**
- das Portalbett (1) aus Kunststoff und/oder Beton und/oder einem Gemisch aus beiden Materialien oder aus Stahlguß besteht, und insbesondere
- die Durchgangsöffnungen (6, 6') dem Hindurchführen von Energieversorgungsleitungen in Längsrichtung dienen, und insbesondere
- bei einem aus Kunststoff und/oder Beton bestehenden Portalbett (1) die Durchgangsöffnungen (6') übereinander angeordnete kreisförmige Durchgangsöffnungen, insbesondere drei Durchgangsöffnungen, sind.

6. Werkzeugmaschine nach einem der vorhergehenden Ansprüche,
**dadurch gekennzeichnet, daß**
- alle am Portalbett (1) angeordneten, in Längsrichtung (Z) verlaufenden Führungsbahnen (5) identische Führungsbahnen sind und sich insbesondere über die gesamte Länge des Portalbettes (1) erstrecken, und insbesondere
- die mit formschlüssigem Hintergriff ausgestatteten Führungsbahnen einen pilzförmigen Querschnitt aufweisen.

7. Werkzeugmaschine nach einem der vorhergehenden Ansprüche,
**dadurch gekennzeichnet, daß**
- das Portalbett wenigstens auf seiner Oberseite (7) und auf seiner Frontseite (8) in Längsrichtung verlaufende Führungsbahnen (5) aufweist, und insbesondere
- auf der Oberseite (7) zwei in Längsrichtung verlaufende Führungsbahnen (5a, 5b) angeordnet sind, die insbesondere nahe am vorderen und hinteren Ende der Oberseite (7) positioniert sind, und insbesondere
- auf der Frontseite (8) wenigstens drei, insbesondere wenigstens vier in Längsrichtung verlaufende Führungsbahnen (5c - 5f) angeordnet sind, wovon insbesondere die oberste und die unterste der Führungsbahnen der Frontseite (8) nahe der Oberkante bzw. Unterkante des Portalbettes (1) angeordnet sind.

8. Werkzeugmaschine nach einem der vorhergehenden Ansprüche,
**dadurch gekennzeichnet, daß**
- die Bettfüße (3) eine geringere Höhe als das Portalbett (1) selbst aufweisen, insbesondere eine so geringe Höhe, daß der Höhenabstand zwischen der Unterseite (9) des Bettes und der Oberseite des Untergrundes, insbesondere einer Grundplatte (2), gerade zum Hindurchführen von Energieversorgungsleitungen wie Elektrokabeln, Hydraulikleitungen, Pneumatikleitungen von der Hinterseite (13) zur Frontseite (8) des Portalbettes (1) ausreicht, und insbesondere
- die Bettfüße (3) eine Höhe von 10 - 30 cm, insbesondere von 15 - 20 cm, aufweisen.

9. Werkzeugmaschine nach einem der vorhergehenden Ansprüche,
**dadurch gekennzeichnet, daß**
die Unterseite (9) keine Führungsbahnen aufweist.

10. Werkzeugmaschine nach einem der vorhergehenden Ansprüche,
**dadurch gekennzeichnet, daß**
zwischen den Führungsbahnen einer der Seiten, insbesondere zwischen der jeweils ersten und zweiten sowie dritten und vierten Führungsbahn, von jeder Kante des Portalbettes aus betrachtet, rinnenförmige Vertiefungen (10a, 10b, 10c) in der Oberfläche des Portalbettes (1) angeordnet sind, in welchen insbesondere Kugelrollspindeln (11a, 11b, 11c) zum Antrieb von in Längsrichtung (Z) entlang der Führungsbahnen (5) verschiebbaren Maschinenmodulen angeordnet sind.

11. Werkzeugmaschine nach einem der vorhergehenden Ansprüche,
**dadurch gekennzeichnet, daß**
- das Portalbett (1) einstückig ausgebildet ist und die Führungsbahnen (5) insbesondere auf dem Portalbett (1) aufgeschraubt sind, und insbesondere
- die Bettfüße (3) separate Bauteile sind, und insbesondere
- die Befestigung des Portalbettes (1) gegenüber den Bettfüßen (3) und/oder einer Grundplatte (2) Relativverschiebungen zuläßt, insbesondere in Längsrichtung (Z) und der hierzu horizontalen Querrichtung (Y).

12. Werkzeugmaschine nach einem der vorhergehenden Ansprüche,
**dadurch gekennzeichnet, daß**
die Werkzeugmaschine eine Grundplatte (2) aufweist, wobei
- die Vorderkante der Grundplatte (2) eine Abschrägung (14) nach vorne unten aufweist und das Portalbett (1) so auf der Grundplatte (2) positioniert ist, daß ihre Frontseite (8) über der Abschrägung (14) steht, und insbesondere
- unmittelbar vor der Grundplatte (2) ein Späneförderer (15) angeordnet ist.

13. Werkzeugmaschine nach einem der vorhergehenden Ansprüche,
**dadurch gekennzeichnet, daß**
- die Maschinenmodule entlang der in Längsrichtung (Z) verlaufenden Führungen (5) mit Hilfe von Führungsschuhen (16), insbesondere Kugelführungsschuhen, geführt sind, die die Führungsbahnen (5) formschlüssig umgreifen und eine geringere Länge als die Längserstreckung des Maschinenmodules aufweisen, und insbesondere
- pro Führungsbahn und Maschinenmodul zwei Führungsschuhe (16) vorhanden sind.

14. Werkzeugmaschine nach einem der vorhergehenden Ansprüche,
**dadurch gekennzeichnet, daß**
- entlang der Hinterseite (13) des Portalbettes (1) wenigstens eine Kabelschleppvorrichtung (17) zur Nachführung von Kabeln in Längsrichtung (Z) angeordnet ist, welche zwei in Längsrichtung (Z) weisende freie Enden aufweist, von denen das eine bezüglich des Portalbettes fest angeordnet ist und das andere bezüglich des zu versorgenden Maschinenmodules fest angeordnet ist, und insbesondere
- eine Kabelschleppvorrichtung (17a) so weit unten angeordnet ist, daß das hier dem Maschinenmodul zugeordnetes freie Ende unterhalb der Unterseite (9) des Portalbettes (1), insbesondere auf der Höhe der Bettfüße (3), angeordnet ist und das andere freie Ende im unteren Bereich des Portalbettes (1), und über die in dieser Kabelschleppvorrichtung (17a) geführten Kabel ein auf den untersten beiden Führungsbahnen (5e, 5f) der Frontseite (8) geführtes Maschinenmodul, insbesondere ein unterer Werkzeugsupport, mit Energie versorgt wird, wobei die Kabel unter der Unterseite (9) des Portalbettes (1) hindurchgeführt sind, und insbesondere
- im oberen Bereich des Portalbettes (1) eine Kabelschleppvorrichtung (17b) angeordnet ist, deren dem Maschinenmodul zugeordnetes freies Ende oberhalb der Oberseite (7) des Portalbettes (1) angeordnet ist.

## Claims

1. A machine tool comprising a bed (1) on which are arranged guide tracks (5) for carrying machine modules, wherein
(A) the bed is a portal bed (1) which is stood up on two bed feet (3) which are spaced in its longitudinal direction (Z), and
(B) the portal bed (1) has guide tracks (5) extending in longitudinal direction (Z),
**characterized in that**
(C) the portal bed has at least two through openings (6, 6') extending therethrough in the longitudinal direction (Z), and that
(D) the guide tracks (5) are guide cross-sections which are provided with engagement therebehind in positively locking relationship in both transverse directions with respect to the longitudinal direction (Z).

2. A machine tool as set forth in claim 1
**characterized in that**
- the at least two bed feet (3) which are spaced in the longitudinal direction (Z) are arranged at the ends of the portal bed (1) in longitudinal direction (Z), and especially that
- the space under the portal bed (1) between the bed feet (3) is freely accessible transversely with respect to the longitudinal direction (Z).

3. A machine tool as set forth in one of the preceding claims
**characterized in that** the portal bed (1) has guide tracks (5) extending exclusively in the longitudinal direction (Z).

4. A machine tool as set forth in one of the preceding claims
**characterized in that**
- the portal bed (1) transversely with respect to the longitudinal direction (Z) is of a rectangular cross-section which in particular is on edge, and especially that
- the cross-section of the portal bed (1) is of a height which corresponds to between 1.5 times and 3 times and in particular between 1.8 times and 2.2 times the depth of the bed, or that
- the portal bed (1) is of a square cross-section.

5. A machine tool as set forth in one of the preceding claims
**characterized in that** the portal bed (1) comprises plastic material and/or concrete and/or a mixture of the two materials or cast steel, and especially that
- said through openings (6, 6') serve to pass energy supply lines therethrough in the longitudinal direction, and especially that
- in the case of a portal bed (1) comprising plastic material and/or concrete the through openings (6') are circular through openings which are arranged in mutually superposed relationship, in particular three through openings.

6. A machine tool as set forth in one of the preceding claims
**characterized in that**
- all guide tracks (5) arranged on the portal bed (1) and extending in the longitudinal direction (Z) are identical guide tracks and in particular extend over the entire length of the portal bed (1), and especially that
- the guide tracks provided with engagement therebehind in positively locking relationship are of a mushroom-shaped cross-section.

7. A machine tool as set forth in one of the preceding claims
**characterized in that**
- the portal bed has guide tracks (5) extending in the longitudinal direction at least on its top side (7) and on its front side (8), and especially that
- arranged on the top side (7) are two guide tracks (5a, 5b) which extend in the longitudinal direction and which in particular are arranged near the front and rear ends of the top side (7), and especially that
- arranged on the front side (8) are at least three and in particular at least four guide tracks (5c - 5f) extending in the longitudinal direction, of which in particular the uppermost and the lowermost of the guide tracks at the front side (8) are arranged near the top edge and the lower edge respectively of the portal bed (1).

8. A machine tool as set forth in one of the preceding claims
**characterized in that**
- the bed feet (3) are of a smaller height than the portal bed (1) itself and in particular are of such a small height that the difference in height between the underside (9) of the bed and the top side of the foundation on which the bed is supported, in particular a base plate (2), is just sufficient for passing energy supply lines such as electrical cables, hydraulic conduits, pneumatic lines, through from the rear side (13) to the front side (8) of the portal bed (1), and especially that
- the bed feet (3) are between 10 and 30 cm, in particular between 15 and 20 cm, in height.

9. A machine tool as set forth in one of the preceding claims the underside (9) does not have any guide tracks.

10. A machine tool as set forth in one of the preceding claims
**characterized in that**
disposed between the guide tracks of one of the sides, in particular between the respective first and second and the third and fourth guide tracks, viewed from each edge of the portal bed, are channel-shaped recesses (10a, 10b, 10c) in the surface of the portal bed (1), in particular ball rolling spindles (11a, 11b, 11c) being arranged in the channel-shaped recesses for the drive of machine modules which are displaceable in the longitudinal direction (Z) along the guide tracks (5).

11. A machine tool as set forth in one of the preceding claims
**characterized in that**
- the portal bed (1) is in one piece and the guide tracks (5) are in particular screwed on the portal bed (1), and especially that
- the bed feet (3) are separate components, and especially that
- the fixing of the portal bed (1) with respect to the bed feet (3) and/or a base plate (2) permits relative displacements, in particular in the longitudinal direction (Z) and in the transverse direction (Y) which is horizontal in relation thereto.

12. A machine tool as set forth in one of the preceding claims
**characterized in that**
the machine tool has a base plate (2), whereby
- the front edge of the base plate (2) has a bevel (14) forwardly and downwardly and the portal bed (1) is so positioned on the base plate (2) that the front side (8) thereof projects over the bevel (14), and especially that
- a chip conveyor (15) is arranged immediately in front of the base plate (2).

13. A machine tool as set forth in one of the preceding claims
**characterized in that**
- the machine modules are guided along the guides (5) extending in longitudinal direction (Z) by means of guide shoes (16), in particular ball guide shoes, which embrace the guide tracks (5) in positively locking relationship and which are of a shorter length than the longitudinal extent of the machine module, and especially that
- there are two guide shoes (16) per guide track and machine module.

14. A machine tool as set forth in one of the preceding claims
**characterized in that**
- arranged along the rear side (13) of the portal bed (1) is at least one trailing cable arrangement (17) for tracking displacement of cables in the longitudinal direction (Z), which arrangement has two free ends which face in the longitudinal direction (Z) and of which the one is arranged fixedly with respect to the portal bed and the other is arranged fixedly with respect to the machine module to be supplied, and especially that
- that a trailing cable arrangement (17a) is arranged so far downwardly that the free end which is here associated with the machine module is arranged beneath the underside (9) of the portal bed (1), in particular at the height of the bed feet (3), and the other free end is arranged in the lower region of the portal bed (1), and a machine module guided on the lowermost two guide tracks (5e. 5f) of the front side (8), in particular a lower tool support, is supplied with energy by way of the cables which are guided in said trailing cable arrangement (17a), wherein the cables are passed through under the underside (9) of the portal bed (1), and especially that
- arranged in the upper region of the portal bed (1) is a trailing cable arrangement (17b) whose free end which is associated with the machine module is arranged above the top side (7) of the portal bed (1).

## Revendications

1. Machine outil avec un bâti (1) sur lequel sont disposés les guidages (5) pour les modules de la machine ou
A - le bâti est un bâti portail (1), assis au moins sur deux semelles du bâti (3), distancées dans la direction longitudinale (Z) de celui-ci et
B - le bâti portail (1) présente les guidages (5) qui se déroulent dans la direction longitudinale (Z), **caractérisé en ce que**,
C - le bâti portail présente au moins deux orifices de passage (6, 6'), d'un bout à l'autre dans la direction longitudinale (Z) et
D - aux guidages (5), il s'agit de sections transversales de guidage dans les deux directions transversales à la direction longitudinale (Z), prévus avec éléments de fixation par forme.

2. Machine outil selon la revendication 1, **caractérisé en ce que**,
- les semelles du bâti (3), au moins en nombre de deux, distancées dans la direction longitudinale (Z) sont disposées dans la direction longitudinale (Z) aux bouts du bâti portail (1) et spécialement
- l'espace de dessous du bâti portail entre les semelles du bâti (3), transversal à la direction longitudinale (Z), est libre et accessible.

3. Machine outil selon l'une des revendications antérieures, **caractérisé en ce que**, le bâti portail (1) présente des guidages (5), déroulés exclusivement dans la direction longitudinale (Z)

4. Machine outil selon l'une des revendications antérieures, **caractérisé en ce que**,
- le bâti portail (1) présente une section transversale rectangulaire avec le côté le plus grand en position verticale et spécialement
- la section transversale du bâti portail (1) présente une hauteur qui correspond à une valeur de 1,5 à 3 fois, spécialement de 1,8 à 2,2 fois de la profondeur du bâti ou
- le bâti portail (1) présente une section transversale carrée.

5. Machine outil selon l'une des revendications antérieures, **caractérisé en ce que**,
- le bâti portail (1) est d'une matière plastique et/ou de béton et/ou un mélange contenant toutes les deux matières ou d'acier coulé et spécialement
- les orifices de passage (6, 6') servent pour l'introduction des conduites d'alimentation d'énergie dans la direction longitudinale et spécialement
- à un bâti portail (1) en matière plastique et/ou de béton, les orifices de passage (6') sont des orifices de passage circulaires placés l'un sur l'autre, spécialement trois orifices de passage.

6. Machine outil selon l'une des revendications antérieures, **caractérisé en ce que**,
- tous les guidages (5) déroulés dans la direction longitudinale (Z), placés dans le bâti portail (1) sont des guidages identiques qui s'étendent spécialement sur la longueur entière du bâti portail (1) et spécialement
- les guidages prévus avec des éléments de fixation par forme ont une section transversale en forme de champignon.

7. Machine outil selon l'une des revendications antérieures, **caractérisé en ce que**,
- le bâti portail présente des guidages (5) déroulés dans la direction longitudinale, au moins sur sa partie supérieure (7) et sur sa partie frontale (8) et spécialement
- sur la partie supérieure (7) il y a deux guidages (5a, 5b) déroulés dans la direction longitudinale (Z), positionnés spécialement tout près du bout devant et du bout postérieur de la partie supérieure (7) et spécialement
- sur la partie frontale (8) sont disposé au moins trois, spécialement au moins quatre guidages (5c-5f), déroulés dans la direction longitudinale ainsi que le plus haut et le plus bas d'entre les guidages soit placé tout près du côté supérieur respectivement inférieur du bâti portail (1)

8. Machine outil selon l'une des revendications antérieures, **caractérisé en ce que**,
- les semelles du bâti (3) présentent une hauteur plus petite par rapport au bâti portail (1), spécialement une hauteur si petite que la distance entre la partie inférieure (9) du bâti et la partie supérieure de la fondation, spécialement à une plaque de base (2) sert seulement pour l'introduction du côté de la partie postérieure (13) vers la partie frontale (8) du bâti portail (1) des conduites d'alimentation d'énergie par exemple: câbles électriques, conduites hydrauliques, conduites pneumatiques et spécialement
- les semelles du bâti (3) présentent une hauteur de 10-30 cm, spécialement de 15-20 cm.

9. Machine outil selon l'une des revendications antérieures, **caractérisé en ce que**, la partie inférieure (9) ne présente pas de guidages.

10. Machine outil selon l'une des revendications antérieures, **caractérisé en ce que**, entre les guidages d'une partie, spécialement entre le premier et le deuxième aussi bien qu'entre le troisième et le quatrième guidage regardant du chaque côté du bâti portail, sur la surface du bâti portail se trouvent les creux (10a, 10b, 10c) en forme d' auge, où spécialement se trouvent les arbres à roulements (11a, 11b, 11c) pour la commande des modules de machine, déplaçables au long des guidages (5) dans la direction longitudinale (Z)

11. Machine outil selon l'une des revendications antérieures, **caractérisé en ce que**,
- le bâti portail (1) est une pièce monobloc et les guidages (5) sont spécialement vissés dans le bâti portail (1) et spécialement
- les semelles du bâti (3) sont des éléments constructifs distincts et spécialement
- la fixation du bâti portail (1) par rapport aux semelles du bâti (3) et/ou par rapport à une plaque de base (2) permet un déplacement relatif, spécialement dans la direction longitudinale (Z) et dans la direction transversale (Y), horizontale par rapport à celle-ci.

12. Machine outil selon l'une des revendications antérieures, **caractérisé en ce que**,
- la machine outil présente une plaque de base (2), où le côté devant de la plaque de base (2) présente une inclinaison (14) et le bâti portail est positionné sur la plaque de base (2) ainsi que la partie frontale (8) de celui-ci se positionne au-dessus de l'inclinaison (14) et spécialement
- même devant la plaque de base (2) est assis un transporteur de copeau (15)

13. Machine outil selon l'une des revendications antérieures, **caractérisé en ce que**,
- les modules de la machine sont déplacés au long des guidages (5) déroulés dans la direction longitudinale (Z) à l'aide des contacts glissants (16), spécialement des contacts glissants sphériques qui entrent sur les guidages (5) par un assemblage par forme et qui présentent une longueur plus petite que l'étendue longitudinale du module de machine et spécialement
- il y a deux contacts glissants (16) pour chaque guidage et module de machine.

14. Machine outil selon l'une des revendications antérieures, **caractérisé en ce que**,
- au long de la partie postérieure (13) du bâti portail (1) est placé un dispositif de passage du câble dans la direction longitudinale (Z) et qui présente deux bouts libres orientés dans la direction longitudinale (Z), l'un des bouts du câble étant fixé au bâti portail et l'autre au module de machine qui est alimenté par celui-ci, et spécialement
- un dispositif de passage du câble (17a) est placé si bas que le bout libre du câble placé ici au module de machine se trouve sous la partie inférieure (9) du bâti portail, spécialement à l'hauteur des semelles du bâti (3) et l'autre bout libre dans la zone inférieure du bâti portail et par le câble guidé dans ce dispositif de passage du câble (17a) est alimenté avec énergie un module de la machine, spécialement un port-outil inférieur qui est guidé sur les deux guidages (5e, 5f) de la partie frontale (8), où les câbles sont passés au-dessous de la partie inférieure (9) du bâti portail (1) et spécialement
- dans la partie supérieure du bâti portail (1) est placé un dispositif de passage du câble (17b) dont le bout libre placé au module de machine se trouve au-dessus de la partie supérieure (7) du bâti portail.
